# EUROPÄISCHE PATENTSCHRIFT

(11) **EP 1 842 580 B1**
(45) Veröffentlichungstag und Bekanntmachung des Hinweises auf die Patenterteilung: **13.03.2013**
(21) Anmeldenummer: 07007050.3
(22) Anmeldetag: 04.04.2007
(51) Int. Cl.: B01D 61/58, B01D 61/48, B01D 63/10, B01D 61/14, B01D 63/02

(54) **Vorrichtung zur kontinuierlichen elektrochemischen Entsalzung mit integrierter Membranstufe**
Device and continuous electrochemical desalination with an integrated membrane stage
Dispositif destiné au dessalage électrochimique continu avec une étape membranaire intégrée

(30) Priorität: 06.04.2006 CH 5702006
(43) Veröffentlichungstag der Anmeldung: 10.10.2007
(73) Patentinhaber: P & LS Holding GmbH, 5310 Mondsee (AT)
(72) Erfinder: Johann, Jürgen, 69226 Nussloch (DE); Menzel, Thomas, 4148 Pfeffingen (CH); Bissen, Monique, 5310 Mondsee (AT); Schramm, Thomas, 79541 Lörrach (DE); Brand, Christian, 68790 Morschwiller le Bas (FR)
(74) Vertreter: Bohest AG

(56) Entgegenhaltungen:
- EP-A- 0 417 506
- EP-A- 0 570 341
- EP-A- 1 222 954
- WO-A-2004/101119
- US-A1- 2002 158 014
- US-B1- 6 190 528
- US-B1- 6 461 512

## Beschreibung

Die Erfindung betrifft eine neue Vorrichtung zur kontinuierlichen elektrochemischen Entsalzung und Filtration wässriger Lösungen, insbesondere in Form eines Wickelmoduls.

Das Einzelverfahren der Elektrodeionisation ist seit Ende der 1950iger Jahre bekannt. Eine Beschreibung des Verfahrens wird erstmals in Industrial and Engineering Chemistry 1955, Vol. 47, No. 1 gegeben. Vorrichtungen zur Durchführung des Verfahrens in Plattenmodulen sind beispielsweise in US-A-4,465,573 und US-A-4,925,541 beschrieben.

Wickelmodule zur Elektrodeionisation, bei denen sowohl die zu entsalzende wässerige Elektrolytlösung als auch das Konzentrat tangential (d.h. von der äusseren Mantelfläche spiralförmig nach innen zum Zentrum oder umgekehrt) geführt werden, sind etwa in der EP-A-0 570 341 beschrieben.

Wickelmodule zur Elektrodeionisation, bei denen das Konzentrat tangential, aber der zu entsalzende Elektrolyt axial (d.h. von der einen Stirnseite des Moduls zur anderen Stirnseite) geführt ist, sind in der WO-A-2004/101119 und in US-B-6,190,528 beschrieben.

In allen angeführten Ausführungsformen wird eine kontinuierliche elektrochemische Entsalzung beschrieben, bei der zwischen zwei Elektroden, Kathode und Anode, Kationen- und Anionenaustauschermembranen in alternierender Reihenfolge angeordnet sind. Der Raum zwischen zwei benachbarten Membranen definiert jeweils eine Verdünnungskammer bzw. eine Konzentratkammer. Die Verdünnungskammer ist entweder mit Ionenaustauscherharz und/oder ionenleitfähigem Material gefüllt, um die Kammergeometrie zu definieren. Die Konzentratkammer wird durch ein Netz aus Kunststoff (Spacer) und/oder ionenleitfähigem Material (z.B. Ionenaustauscherharz) gebildet. Die Anzahl an Verdünnungs- und Konzentratkammern kann von jeweils einer wiederholenden Einheit bis zu mehreren (techn. ausgeführt max. 36) variieren. Die jeweilig ausgeführten Möglichkeiten zur Abdichtung der einzelnen Kammern nach aussen sind den angeführten Patentschriften zu entnehmen.

Im Betrieb der Module werden die Verdünnungskammer oder die Verdünnungskammern in einmaligem Durchlauf durchströmt während die Konzentratseite je nach Betriebsart in einmaligem oder mehrmaligem Durchlauf durchströmt werden kann. Die Verteilung des zuströmenden Wassers im Modul auf die einzelnen Kammern wird über interne Verteilsysteme erreicht.

Bei der Durchströmung der Verdünnungskammer unter Druck wird das aufzubereitende Wasser über das Ionenaustauscherharz geleitet. Entsprechend den Betriebsbedingungen können aufgrund der mechanischen Beanspruchung durch den Druckabfall über das Ionenaustauscherharz Abrieb und feine Partikel entstehen. Üblicherweise sind die Zu- und Abströmöffnungen der einzelnen Kammern so ausgestaltet, dass kein Ionenaustauscherkorn und grössere Bruchstücke des Ionenaustauscherkorns aus den Kammern ausgespült werden kann. Dies kann z.B. durch das Einbringen eines Harzfangnetzes bewerkstelligt werden. Die Trenngrenze des Netzes liegt bei ca. 200 µm. Kleinere Partikel können das Netz passieren und gelangen so mit dem Produktwasser in die nachfolgenden Verfahrensstufen der Wasseraufbereitung. Als Partikel können auch Mikroorganismen, deren Grösse üblicherweise zwischen 0,2 und 5 µm liegt, aus Verfahrensstufen vor dem Elektrodeionisationsmodul betrachtet werden, da der Prozess der Wasseraufbereitung z.B. für die pharmazeutische, die mikroelektronische oder die Kraftwerks-Industrie unter wirtschaftlicher Betrachtungsweise nicht unter sterilen Bedingungen durchgeführt wird. Um nachfolgende Verfahrensstufen vor Partikeln zu schützen, wird deshalb oft ein Membranmodul, etwa ein Ultrafiltrationsmodul, stromabwärts des Elektrodeionisationsmoduls in Reihe geschaltet.

Bei dem Betrieb von Modulen zur Elektrodeionisation wie oben beschrieben hat sich andererseits gezeigt, dass sich die Packungsdichte des Ionenaustauscherharzes in der Verdünnungskammer günstig auf die erzielbare Qualität (Restleitfähigkeit) des Produktwassers auswirkt. Die Packungdichte des Ionentauschers lässt sich wiederum über den im Elektrodeionisationsmodul herrschenden Innendruck (nicht Druckabfall) beeinflussen. Zur Erzielung eines gewissen Innendrucks wurde bislang hinter dem Elektrodeionisationsmodul, aber vor dem Membranmodul ein Druckhalteventil vorgesehen, mit dem ein geeigneter Gegendruck auf der Produktwasserseite (Diluat) des Elektrodeionisationsmoduls angelegt wurde. Bei Wickelmodulen, bei denen der Fluss des Elektrolyten tangential geführt wird, wurde dieser Gegendruck etwa typisch zwischen 0,5 und 1 bar gewählt; bei Wickelmodulen, bei denen der Fluss des Elektrolyten axial geführt wird, betrug dieser Gegendruck typisch etwa 0,3 bis 3 bar.

EP1222954 und EP0417506 beschreiben Vorrichtungen die ein Elektrodeionisationsmodul mit einem Querstromultrafiltrationsmodul kombinieren.

Der Erfindung stellt sich die Aufgabe, eine Vorrichtung und ein Verfahren bereitzustellen, bei denen der erforderliche Gegendruck auf der Diluatseite des Elektrodeionisationsmoduls bei dessen Betrieb erreicht werden kann, und gleichzeitig die Abtrennung von Partikeln, Abrieb vom Ionenaustauscherharz und/oder Mikroorganismen erzielt werden kann.

Die Aufgabe wird gemäß Anspruch 1 erfindungsgemäss gelöst durch eine Vorrichtung zur Elektrodeionisation einer wässerigen Elektrolytlösung, umfassend ein Elektrodeionisationsmodul, ein Ultrafiltrationsmodul und ein Verbindungsteil, das das Elektrodeionisationsmodul und das Ultrafiltrationsmodul dergestalt miteinander verbindet, dass es zum Leiten des beim Betrieb der Vorrichtung im Elektrodeionisationsmodul aus der Elektrolytlösung erzeugten Diluates vom Elektrodeionisationsmodul zum Ultrafiltrationsmodul befähigt ist, dadurch gekennzeichnet, dass die Vorrichtung in dem Verbindungsteil kein verstellbares Druckhalteventil aufweist.

Bevorzugte Ausführungsformen der erfindungsgemässen Vorrichtung ergeben sich aus den Unteransprüchen.

Es wurde überraschenderweise gefunden, dass sich ein stromabwärts des Elektrodeionisationsmodul liegendes Ultrafiltrationsmodul nicht nur zur Abtrennung von Ionentauscherresten und Bakterien aus dem Diluat, sondern gleichzeitig auch zur Erzeugung des Gegendrucks hinter dem Elektrodeionisationsmodul eignet, der für den Erhalt der Packungsdichte des Ionentauschers im Elektrodeionisationsmodul wichtig ist. Dies ist auch deswegen überraschend, weil diese Ultrafiltrationsmodule keinen konstanten, vorhersagbaren Gegendruck erzeugen; sie setzen sich im Verlauf ihres Betriebs allmählich mit Filterrückständen zu und erzeugen so einen zeitlich ansteigenden Gegendruck hinter dem Elektrodeionisationsmodul. Durch die Verwendung der Ultrafiltrationsmodule als gegendruckerzeugende Mittel erübrigt sich der Einbau eines Druckhalteventils im oder hinter dem Elektrodeionisationsmodul, oder vor oder im Ultrafiltrationsmodul.

Als "Elektrodeionisationsmodul" wird im Rahmen der vorliegenden Anmeldung jede elektrochemische Zelle verstanden, die umfasst:
a) ein elektrolytlösunggefülltes oder elektrolytlösungdurchströmtes Kathodenkompartiment mit einer Kathode und einer Kationentauschermembran, wobei die Kationentauschermembran eine der räumlichen Begrenzungen des Kathodenkompartiments bildet und die das Kathodenkompartiment füllende oder durchströmende Elektrolytlösung (= Katholyt) sowohl mit der Kathode als auch mit der Kationentauschermembran in Berührung kommt;
b) ein elektrolytlösunggefülltes oder elektrolytlösungdurchströmtes Anodenkompartiment mit einer Anode und einer Anionentauschermembran, wobei die Anionentauschermembran eine der räumlichen Begrenzungen des Anodenkompartiments bildet und die das Anodenkompartiment füllende oder durchströmende Elektrolytlösung (= Anolyt) sowohl mit der Anode als auch mit der Anionentauschermembran in Berührung kommt; und
c) ein Zwischenkompartiment, wobei die besagte Kationentauschermembran und die besagte Anionentauschermembran zwei der räumlichen Begrenzungen dieses Zwischenkompartimentes bilden. Das Zwischenkompartiment kann gewünschtenfalls durch weitere in seinem Inneren paarweise vorhandene und voneinander beabstandet angeordnete Kationen- und Anionentauschermembranen in Subkompartimente unterteilt sein. Alle Kationen- und Anionentauschermembranen, die das Zwischenkompartiment begrenzen und gewünschtenfalls unterteilen, sind entlang dem Gradienten des elektrischen Feldes betrachtet in alternierender Reihenfolge angeordnet. In Richtung von der Kathode zur Anode entlang dem Gradienten des elektrischen Feldes betrachtet ist jedes von einem Kationentauschermembran/Anionentauschermembran-Paar eingeschlossene Subkompartiment mit einem Ionentauscherharz, bevorzugt einem Mischbetttauscherharz, oder mit einem ioneleitfähigen Material gefüllt und wird von der zu entsalzenden Elektrolytlösung durchströmt (= "Diluatkammern"), währenddem jedes von einem Anionentauschermembran/Kationentauschermembran-Paar begrenzte Subkompartiment von aufzukonzentrierender Elektrolytlösung durchströmt wird (= "Könzentratkammern"). Auch die im Kathodenkompartiment a) und Anodenkompartiment b) vorhandene Elektrolytlösung wird im elektrochemischen Betrieb an Elektrolyten aufkonzentriert, daher sind diese ebenfalls "Konzentratkammern". Die Elektrolytlösung in einer Diluatkammer kommt mit den beiden die Diluatkammer begrenzenden Ionentauschermembranen in Berührung und wird mindestens durch eine solche Ionentauschermembran von der Elektrolytlösung einer angrenzenden Konzentratkammer getrennt.

Bevorzugte Beispiele von erfindungsgemäss verwendbaren Elektrodeionisationsmodulen sind die eingangs diskutierten Plattenmodule und Wickelmodule. Bei den Plattenmodulen werden die oben beschriebenen Konzentrat-und Diluatkammern alle im Parallelfluss zueiander durchströmt, ohne dass sie untereinander in Verbindung stehen. Bei einem Wickelmodul ist der Auslass jeweils einer Konzentratkammer mit dem Einlass einer (in Richtung des Gradienten des elektrischen Feldes gesehen) nächsten Konzentratkammer direkt verbunden (d.h dass Kationentauscher- bzw. Anionentauschermembran der einen Konzentratkammer nahtlos mit der Kationentauscher bzw. Anionentauschermembran verbunden sind), und Zu- und Abflüsse für das Konzentrat sind nur gerade im Anodenkompartiment und im Kathodenkompartiment vorgesehen. Desgleichen sind der Auslass jeweils einer Diluatkammer mit dem Einlass einer (in Richtung des Gradienten des elektrischen Feldes gesehen) nächsten Diluatkammer direkt verbunden, und ein Zufluss für die zu entsalzende Elektrolytlösung ist nur gerade in der einen äussersten Diluatkammer und der Abfluss für das Diluat ist nur gerade in der anderen entgegengesetzt äussersten Diluatkammer vorgesehen.

Eher bevorzugt sind die Wickelmodule, und darunter besonders bevorzugt sind diejenigen Wickelmodule, bei denen die Fliessrichtungen in den Konzentratkammern einerseits und zu entsalzender wässeriger Elektrolytlösung in den Diluatkammern andererseits kreuzförmig aufeinanderstehen; wobei die Fliessrichtung in den Diluatkammern parallel zur Wickelachse des Wickelmoduls, d.h. axial, verläuft.

Als "Ultrafiltrationsmodul" wird im Rahmen der vorliegenden Anmeldung jeder Filter verstanden, der zur filtrativen Entfernung von Mikroorganismen aus einer wässerigen Lösung befähigt ist. Ulrafiltrationsmodule enthalten hierzu typischerweise mindestens eine semipermeable Membran aus einem Polymer mit geeigneter Porengrösse. Beispiele für solche Polymere sind etwa Polyolefine wie Polyethylen, Polypropylen oder Poly(4-methylpenten-1); Polysulfone; Polyethersulfone; aromatische Polyamide; Polyimide; Polyamide-Imide; oder fluorhaltige Polymere wie Polyvinylidenfluorid, Polytetrafluorpropylen, Copolymere von Hexafluorpropylen und Tetrafluorpropylen. Die Ausschlussgrenze der Membran liegt typisch im Bereich von 5000 bis 400000 Dalton. Erfindungsgemäß enthält ein erfindungsgemäss zu verwendendes Ultrafiltrationsmodul die semipermeable Membran in Form einer Vielzahl von Hohlfasern. Für Membranen in Form von Hohlfasern sind Polyvinylidenfluorid und Polyethersulfone als Polymere bevorzugt. Die Hohlfasern weisen bevorzugt eine Porenweite von etwa 0,01 bis etwa 0,2 µm, eher bevorzugt von etwa 0,05 bis etwa 0,2 µm, und bevorzugt einen Innendurchmesser von etwa 10 bis etwa 200 µm, eher bevorzugt von etwa 50 bis etwa 150 µm auf. Die gesamte Membranfläche, die von allen Hohlfasern in einem solchen Ultrafiltrationsmodul gebildet wird, beträgt bevorzugt etwa 0,01 bis etwa 3 m², eher bevorzugt etwa 0,05 bis etwa 1,5 m². Die Herstellung von Hohlfasern mit den obigen gewünschten Eigenschaften ist an sich seit langem bekannt; es wird nur beispielhaft auf den Abschnitt "Hollow Fiber Membranes" in der "Kirk-Othmer Encyclopedia of Chemical Technology" 3. Ausgabe, John Wiley & Sons 12:492-517 (1984) verwiesen. Ultrafiltrationsmodule mit Hohlfasern der oben beschriebenen Art sind aus dem Haushaltsbereich, etwa als Filter in Wasserhahnen, bekannt (siehe z.B. WO-A-02/076589 oder US-A-5,045,198).

Die zu filtrierende wässerige Lösung wird von über eine Einlassöffnung in das Ultrafiltrationsmodul hineingeführt und dringt vom Aussenraum der Hohlfasern in deren Lumen ein. Die Hohlfasern sind im Inneren des Ultrafiltrationsmoduls U-förmig gebogen und zeigen mit ihren offenen Enden zur Filtratseite des Ultrafiltrationsmoduls. Das zu filtrierende, von dem Elektrodeionisationsmodul stammende Diluat wird dabei in das Innere des Ultrafiltrationsmoduls geführt und dringt, wie bereits oben erwähnt, in die Hohlfasern ein. Da beide Enden jeder Hohlfaser zur Filtratseite des Ultrafiltrationsmoduls zeigen, bilden beide Enden einen Auslass für das Filtat. Das aus den Hohlfasern austretende Filtrat kann über eine geeignete Auslassöffnung, die mit den Enden der Hohlfasern in hydraulischer Verbindung steht, dem Ultrafiltrationsmodul entnommen werden.

Als "Verbindungsteil, das das Elektrodeionisationsmodul und das Ultrafiltrationsmodul dergestalt miteinander verbindet, dass es zum Leiten des beim Betrieb der Vorrichtung im Elektrodeionisationsmodul aus der Elektrolytlösung erzeugten Diluates vom Elektrodeionisationsmodul zum Ultrafiltrationsmodul befähigt ist" wird jedes Bauteil verstanden, das eine solche Funktion ausüben kann. Beispiele hierfür sind Röhren, Leitungen, Schläuche, Stutzen oder auch ein Montage-oder Halterungsteil für das Elektrodeionisationsmodul und/oder das oder die Ultrafiltrationsmodul(e), das gleichzeitig Mittel zum diesem Leiten des Diluates (wie etwa inwendige Durchtrittsöffnungen oder Kanäle) aufweist. Ein solches Montage- oder Halterungsteil kann bevorzugt gleichzeitig auch ein Sammelsystem umfassen, das das aus mehreren Austrittsöffnungen des Elektrodeionisationsmoduls austretende Diluat sammelt und in einer einzigen Leitung zu dem Ultrafiltrationsmodul weiterleitet; es kann auch ein Verteilsystem enthalten, das das von dem Elektrodeionisationsmodul stammende Diluat gleichmässig auf mehrere, parallel geschaltete Ultrafiltrationseinheiten verteilt.

Als "verstellbares Druckhalteventil" wird im Rahmen der vorliegenden Anmeldung ein Ventil verstanden, dessen in seinem Inneren auftretender Druckabfall variabel eingestellt werden kann. Die erfindungsgemässe Vorrichtung weist in dem Verbindungsteil und bevorzugt auch im Inneren des Elektrodeionisationsmoduls und im Inneren des Ultrafiltrationsmoduls kein solches Druckhalteventil auf. Wenn die erfindungsgemässe Vorrichtung mehrere Ultrafiltrationsmodule und entsprechend unter Umständen mehrere Verbindungen vom Elektrodeionisationsmodul zu jedem dieser Ultrafiltrationsmodul aufweist, enthält keine der Verbindungen und keines der Ultrafiltrationsmodule ein solches Ventil.

Als "in hydraulischer Verbindung" stehend oder sich befindend sind im Rahmen der vorliegenden Anmeldung zwei Hohlräume oder Aussparungen (Sammelräume, Kanäle, Bohrungen,, Aussparungen, Verteilräume oder Durchrittsöffnungen), wenn sie den flüssigkeitsdichten Übertritt dieser Flüssigkeit vom einen zum anderen Hohlraum ohne nennenswerten Druckabfall gestatten.

Die Herstellung der erfindungsgemässen Vorrichtung ist fachüblich; da die verwendeten Elektodeionisationsmodule und Ultrafiltrationsmodule an sich bekannt sind. Die hydraulische Verbindung des oben beschriebenen Verbindungsteils mit den Ultrafiltrationsmodulen und dem Verteil- bzw. Abnahmesystem des Wickelmoduls kann durch Verkleben, Verschweissen oder durch eine Rohrverschraubung entsprechend der Materialpaarung ausgeführt werden.

Eine weitere Möglichkeit der Verbindung der Ultrafiltrationsmodule mit dem Verbindungsteil in einem äusseren Gehäuserohr besteht in der Verwendung von ein oder mehreren Zugankern. Die Ultrafiltrationsmodule in den entsprechenden Durchtrittsöffnungen des Verbindungsteils werden durch Elastomerdichtungen gedichtet. Die Strömungsführung in der erfindungsgemässen Vorrichtung ergibt sich somit über einen Anschluss an der Zulaufseite, gewünschtenfalls ein integriertes Verteilsystem in dem Verbindungsteil (das das Diluat auf die Ultrafiltrationsmodule verteilt), der parallelen Durchströmung der einzelnen Ultrafiltrationsmodule, und gewünschtenfalls ein integriertes Sammelsystem in einer optionalen Filterhalterplatte (das das aus den Ultrafiltrationsmodulen austretende Filtrat sammelt). Der richtige Abstand zwischen Verbindungsteil und Filterhalteplatte kann gewünschtenfalls durch Streben oder Distanzstützen bewirkt werden. Der restliche Zwischenraum im Verbund Verbindungsteil / Ultrafiltrationseinheiten / Filterhalterplatte / optionale Distanzstützen ist nicht durchströmt und als Luftraum ausgeführt.

Die einzelnen Ultrafiltrationsmodule werden typisch mit einem Volumenstrom von 100 1/h bis 600 1/h, vorzugsweise mit 250 bis 400 1/h, durchströmt. Die Anzahl an einzubauenden Ultrafiltrationsmodulen ergibt sich somit aus dem ganzzahligen Quotient des nominalen Volumenstroms des Elektrodeionisationsmoduls und dem bevorzugten Volumenstrom des einzelnen Ultrafiltrationsmoduls (d.h. z.B. für 500 1/h 2 Stück und für 1000 1/h mindestens 3 Stück).

Die hydraulische Verbindung des oben beschriebenen Verbindungsteils und der Filterhalterplatte mit den Ultrafiltrationseinheiten und dem Verteil- bzw. Abnahmesystem des Elektrodeionisationsmoduls kann durch einen Dichtring mit integrierter O-Ring Dichtung ausgeführt werden. Für die technische Umsetzung der Vorrichtung, ist das Elektrodeionisationsmodul bevorzugt von einem verstärkten Kunststoffmantel oder einem Stahl- oder Edelstahlrohr umgeben.

Für die technische Umsetzung ist die erfindungsgemässe Vorrichtung, umfassend (oder insbesondere bestehend aus) zur Elektrodeionisationsmodul, Ultrafiltrationsmodulen, Verbindungsteil und Filterhalterplatte von einem verstärkten Kunststoffmantel oder einem Stahl- oder Edelstahlrohr umgeben, das einen Festflansch aufweist. Die Verbindung von Elektrodeionisationsmodul und der Vorrichtung erfolgt durch Verschrauben des Flanschdeckels mit dem Festflansch.

Die erfindungsgemässen Vorrichtungen eignen sich zur Elektrodeionisierung der üblicherweise hierfür eingesetzten Rohwässer. Dies sind beispielsweise natürliche Rohwässer, Leitungswasser oder Meerwasser. Diese enthalten alle gewisse Anteile an gelösten, in Ionen dissoziierte Salze und sind daher allesamt Elektrolyte. Vorzugsweise wird das Rohwasser vorgängig teilentsalzt und/oder enthärtet, etwa mittels einer vorgeschalteten Umkehrosmosestufe. Das Rohwasser, d.h. der zu entsalzende Elektrolyt, kann auch vorgängig einer keimtötenden Behandlung, etwa durch UV-Bestrahlung, Behandlung mit Ozon, Chlor oder Hypochlorit, unterzogen worden sein; es kann auch vorgängig bereits einer Filtration zur Entferung von Schwebeteilchen und/oder der Mikroorganismen unterzogen worden sein.

Die Erfindung wird nun unter Bezugnahme auf die Zeichnungen weiter veranschaulicht, in denen:
- **Figur 1** eine Schnittdarstellung einer ersten Ausführungsform der erfindungsgemässen Vorrichtung ist, die oben auch das darin verwendete Verbindungsteil in der Draufsicht nocheinmal zeigt;
- **Figur 2** eine Schnittdarstellung einer zweiten Ausführungsform der erfindungsgemässen Vorrichtung ist, die links unten auch das darin verwendete Verbindungsteil in der Draufsicht nocheinmal zeigt;
- **Figuren 3** **bzw. 4** die Ergebnisse von Vergleichsversuchen hinsichtlich der Bildung und Qualität des Diluates bei einer vorbekannten Vorrichtung bzw. der Vorrichtung gemäss Ausführungsform 1 zeigen.

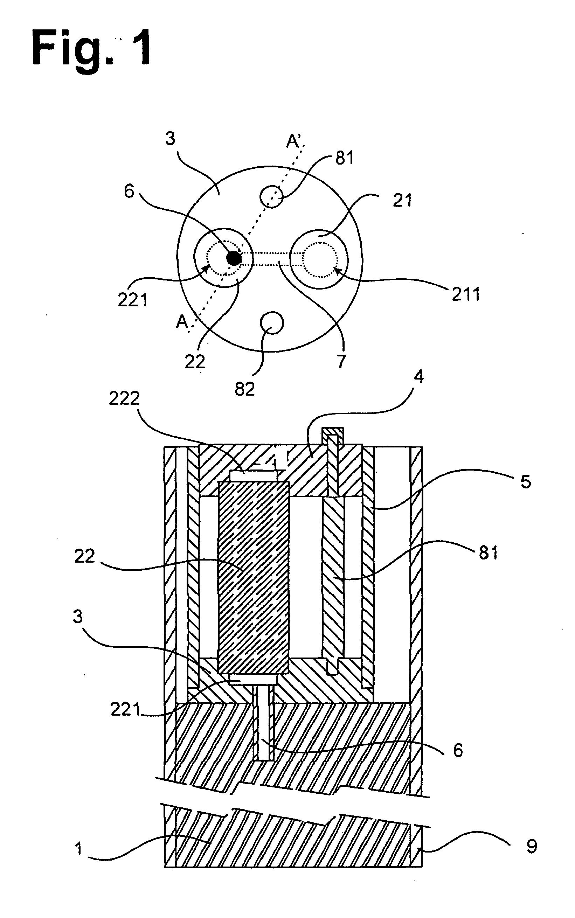

### Ausführungsform 1 (Figur 1)

Bei dieser Ausführungsform wird als das Eletrodeionisationsmodul 1 ein Wickelmodul eingesetzt, bei dem die zu entsalzende Elektrolytlösung und das Konzentrat tangential durch die spiralförmig aufgewickelten Diluat- und Konzentratkammern geführt werden. Sie ist für eine nominale Kapazität von typisch etwa 400 bis etwa 700 1/h zu deionisierende Elektrolytlösung gedacht. Die hydraulischen und elektrischen Anschlüsse des Wickelmoduls sind hier nicht gezeigt. Diese Ausführungsform weist zwei Ultrafiltrationseinheiten 21, 22 (Hohlfasermembranfilter) auf. Diese sind handelsübliche Legionellenfilter, die mit Hohlfasermembranen mit einer Ausschlussgrenze von etwa 100000 Dalton ausgestattet sind. Die Hohlfasern sind U-förmig gebogen (siehe vorstehende allgemeine Beschreibung). Die beiden Ultrafiltrationseinheiten werden wickelmodulseitig von einem Verbindungsteil 3 gehalten. Auf der Filtratseite der beiden Ultrafiltrationseinheiten 21, 22 werden diese von einer Filterhalterplatte 4 gehalten. Verbindungsteil 3 und Filterhalterplatte 4 befinden sich in einem äusseren Gehäuserohr 5 aus Stahl, Edelstahl oder Kunststoff. Das Verbindungsteil 3 (das im oberen Teil der Figur nocheinmal als Draufsicht von den Ultrafiltrationsmodulen 21, 22 her gesehen gezeigt ist) weist eine Durchtrittsöffnung 6 auf, die das vom Wickelmodul stammende Diluat zu den beiden Ultrafiltrationseinheiten 21, 22 leitet. Innerhalb des Verbindungsteils 3 verläuft ein Kanal 7, der die Fassungen 211, 221 der beiden Ultrafiltrationseinheiten 21, 22 hydraulisch miteinander verbindet und so ein Verteilsystem bildet, das das aus der Durchtrittsöffnung 6 durchtretende Diluat auf die beiden Ultrafiltrationseinheiten 21, 22 verteilt. Zwischen Verbindungsteil 3 und Filterhalteplatte 4 sind auch zwei Distanzstützen 81, 82 aus Chromstahl vorhanden. Der Verbund aus Verbindungsteil 3, Ultrafiltrationseinheiten 21, 22, Filterhalteplatte 4, Gehäuserohr 5 und Distanzstützen 81, 82 ist in der Figur 1 entlang der Schnittebene A-A' geschnitten; deren Lage ist im oben nocheinmal gezeigten Verbindungsteil 3 angedeutet. Aufgrund der Lage der Schnittebene A-A' ist in der Figur 1 nur das eine Ultrafiltrationsmodul 22 und nur die eine Distanzstütze 81 sichtbar; der Kanal 7 ist deswegen in dieser Schnittdarstellung nicht sichtbar. Im Verbindungsteil 3 sind zur Aufnahme der Ultrafiltrationsmodule Bohrungen 211, 221 vorgesehen; in der Filterhalterplatte 4 sind ebenfalls entsprechende Bohrungen (nur eine mit Bezugszeichen 222 sichtbar) enthalten. Die Ultrafiltrationsmodule 21, 22 können in den einzelnen Bohrungen 211, 221, 222 durch Verkleben oder Verschweissen oder mit Dichtungsringen fest mit dem Verbindungsteil 3 und der Filterplatte 4 verbunden sein. Der Fluss des aus dem Wickelmodul austretenden Diluates geschieht somit durch die Durchtrittsöffnung 6, durch das besagte Verteilsystem in dem Verbindungsteil 3, durch die beiden Ultrafiltrationsmodule 21, 22 in Parallelschaltung und dann gewünschtenfalls durch ein entsprechendes, in die Filterhalterplatte integriertes Sammelsystem (in der Figur nicht gezeigt) und dann über einen ebenfalls optionalen, in der Figur nicht gezeigten Anschlussstutzen. Der Raum zwischen Verbindungsteil 3 und Filterhalterplatte 4 ausserhalb der Ultrafiltrationsmodule 21, 22 und dem Gehäuserohr 5 ist nicht durchströmt und als Luftraum ausgeführt. Die Ein- und Auslässe für das Konzentrat, die Zuflüsse für die zu entsalzende Elektrolytlösung und die elektrischen Anschlüsse sind in der Figur nicht gezeigt; sie wären ausserhalb des Gehäuserohrs 5 an der Stirnseite der Vorrichtung vorhanden. Die gesamte Vorrichtung gemäss Ausführungsform 1 kann in ein vorzugsweise zylindrisches Mantelteil 9 eingebaut werden.

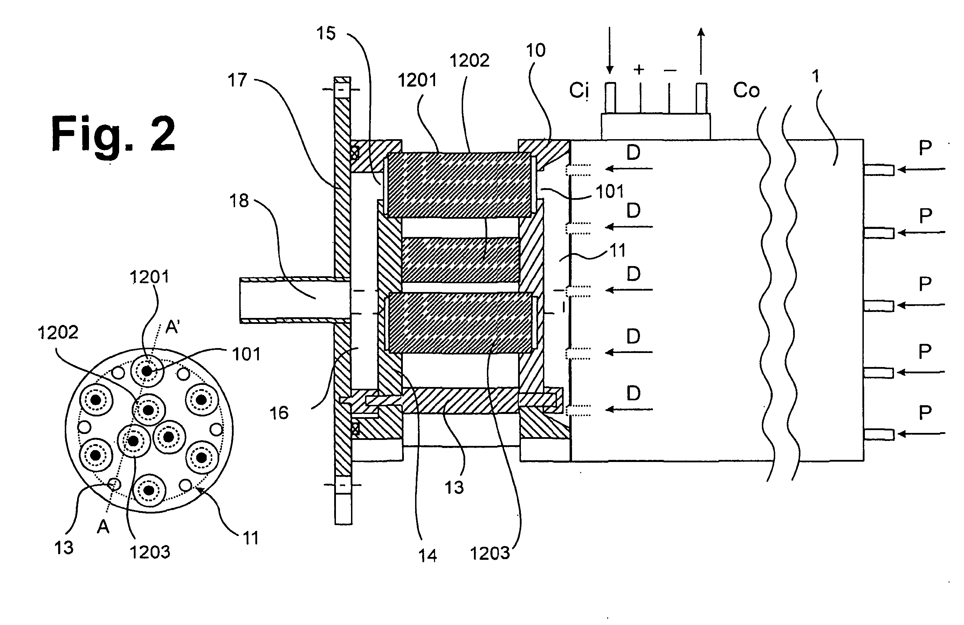

### Ausführungsform 2 (Figur 2)

Diese Ausführungsform der erfindungsgemässen Vorrichtung ist für eine nominale Kapazität von typisch etwa 2500 bis etwa 3300 1/h zu deionisierender Elektrolytlösung gedacht. Sie enthält als Elektrodeionisationsmodul 1 ein Wickelmodul, in dem Diluat und Konzentrat im Kreuzstrom (mit axial geführtem Diluat) geführt sind. Mit "P" sind die axialen Zuflüsse der zu entsalzenden Elektrolytlösung angedeutet ("P" steht für Permeat, da der zugeführte Elektrolyt vorzugsweise bereits das Permeat einer vorgeschalteten, teilentsalzenden Umkehrosmose ist). Mit "D" sind die axialen Abflüsse des Diluates angedeutet. "Ci" bezeichnet dem Einlass für das Konzentrat (Concentrate Inlet) und "Co" den Auslass des Konzentrates (Concentrate outlet). Mit "+" und "-" sind auch die beiden Anschlüsse für die Gleichspannung angegeben. Die Diluatauslässe D des Elektrodeionisationsmoduls 1 münden in ein Verbindungsteil 10 (etwa aus Polyoxymethylen-Copolymer) mit einem Sammelraum 11 und mit neun Durchtrittsöffnungen für das aus dem Elektrodeionisationsmodul 1 austretende Diluat (nur eine davon ist mit Bezugszeichen 101 gezeigt). Jede der neun Durchtrittsöffnungen ist gebohrt und so ausgestaltet, dass darin je ein Ultrafiltrationsmodul unter Verwendung von je einem Dichtungsring (etwa aus EPDM-Kautschuk oder NBR) eingesetzt werden kann. Die insgesamt neun Ultrafiltationsmodule (nur drei davon sind mit den Bezugszeichen 1201, 1202, 1203 gezeigt) sind handelsübliche Legionellenfilter, die mit Hohlfasermembranen mit einer Ausschlussgrenze von 100000 Dalton ausgestattet sind. Die Hohlfasern sind U-förmig gebogen (siehe vorstehende allgemeine Beschreibung). Das nominale maximale Durchtrittsvolumen jedes Ultrafiltrationsmoduls 1201, 1202, 1203 beträgt etwa 800 l/h. Die neun Ultrafiltrationsmodule sind unter Zuhilfenahme von sechs Distanzstützen aus Chromstahl (nur eine davon ist mit Bezugszeichen 13 gezeigt) zwischen Verbindungsteil 10 und einer Filterhalteplatte 14 eingepasst. Die Filterhalteplatte 14 weist wiederum neun Durchtrittsöffnungen für das filtrierte Permeat auf (nur eine ist mit Bezugszeichen 15 gezeigt), in die die Ultrafiltrationsmodule mittels Dichtungsringen aus EPDM-Kautschuk, Silikonkautschuk oder NBR eingepasst sind. Auch die Filterhalteplatte 14 weist an ihrer Aussenseite einen Sammelraum 16 für das filtrierte Diluat auf. Dieser Sammelraum 16 wird durch einen aufgeschraubten Flanschdeckel 17 mit zentralem Auslassstutzen 18 abgeschlossen. Der Verbund aus Verbindungsteil 10, den neun Ultrafiltationsmodulen, den sechs Distanzstützen und der Filterhalteplatte 14 ist in der Figur geschnitten gezeigt. Das Verbindungsteil 10 ist in der Figur links unten nocheinmal in der Draufsicht, von den Ultrafiltrationsmodulen her gesehen, gezeigt; hier ist die Lage der Schnittebene A-A', in der der besagte Verbund geschnitten gezeigt ist, angedeutet. Hier ist auch die Anordnung aller neun Ultrafiltrationsmodule sichtbar: Sechs sind in kreisförmiger Anordnung aussen auf dem Verbindungsteil 3 angeordnet, die restlichen drei im Zentrum des Verbindungsteils 3. Auch die sechs Distanzstützen sind hier gezeigt (nur die eine, in der Schnittdarstellung geschnitten sichtbare Stütze ist wieder mit Bezugszeichen 13 versehen). Mit dem gestrichelten Kreis 11 ist der Sammelraum für das aus dem Elektrodeionisationsmodul 1 austretende Diluat angedeutet; die Strichelung deutet an, dass sich dieser Sammelraum auf der Rückseite des Verbindungsteils 10 befindet.

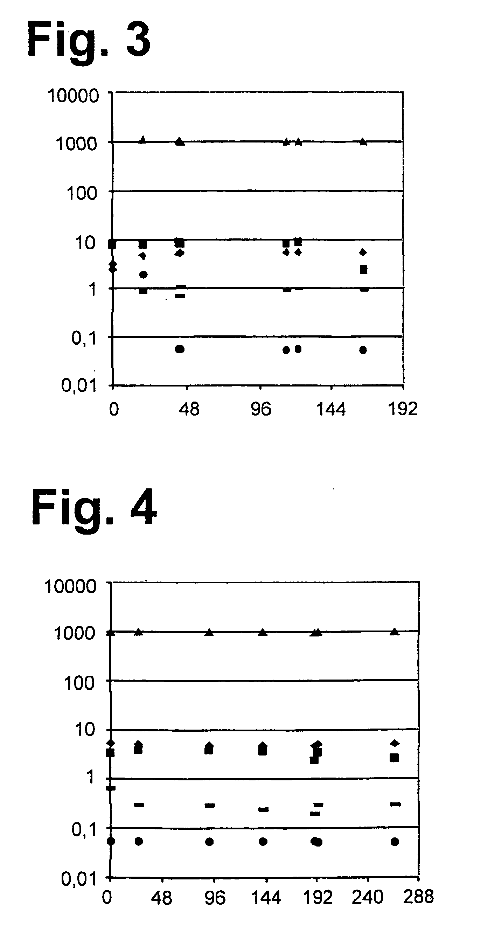

### Vergleichstest (Figuren 3 und 4):

Dabei wurde einerseits eine herkömmliche Vorrichtung zur Elektrodeionisation, umfassend ein Wickelmodul gemäss EP-A-0 570 341 und ein nachgeschaltetes Druckhalteventil, und andererseits eine erfindungsgemässe Vorrichtung gemäss Ausführform 1, die kein Druckhalteventil enthält, hinsichtlich der Betriebsparameter, insbesondere hinsichtlich des hinter dem Wicklungsmodul auftretenden Gegendrucks und hinsichtlich der Produktionsrate und der Restleitfähigkeit des im Wickelmodul gebildeten Diluates, im Langzeitversuch miteinander verglichen. Diese Ergebnisse sind in den Figuren 3 und 4 gezeigt. Es bedeuten in diesen Figuren:
• Die Restleitfähigkeit des Diluates (in µS/cm);
- der Gegendruck im Diluat, also hinter dem Wicklungsmodul (in bar);
▲ A Die Produktionsrate an Diluat (in 1/h)
◆ der Druck im dem Wickelmodul zugeführten Umkehrosmose-Permeat (in bar); und
■ die Restleitfähigkeit im dem Wickelmodul zugeführten Umkehrosmose-Permeat (in µS/cm).

Bei der herkömmlichen Vorrichtung wurde Wasser aus einer Umkehrosmose unter Druck dem Wickelmodul zugeführt. Auf der Diluatseite (Reinwasser) des Moduls wurde mittels des Druckhalteventils ein Gegendruck von ca. 1 bar eingestellt. Unter Anlegen eines typischen Potentials an den Elektroden des Wickelmoduls wurde über 192 Stunden Diluat erzeugt. Die gemessenen Betriebsparameter sind in Figur 3 dargestellt. Wie aus Figur 3 ersichtlich ist, wurde eine konstante Wasserqualität von 0,058 µS/cm bei einer Produktionsrate von 1000 1/h erreicht.

Die Vorrichtung nach Ausführungsform 1 wurde ebenfalls mit Permeat aus einer Umkehrosmose beaufschlagt. Auf der Diluatseite (d.h. hinter dem Wickelmodul) der Vorrichtung wurde der Gegendruck allein durch die beiden nachgeschalteten Ultrafiltrationsmodule 21, 22 erzeugt, da hier kein Druckhalteventil vorhanden war. Nach dem Anlegen eines typischen Potentials an den Elektroden des Wickelmoduls wurde über 288 Stunden Diluat erzeugt. Die gemessenen Betriebsparameter sind in Figur 4 dargestellt. Wie aus Figur 4 ersichtlich ist, wird ebenfalls eine konstante Wasserqualität von 0,055 - 0,056 µS/cm bei einem Volumenstrom von 1000 1/h erreicht.

## Patentansprüche

1. Vorrichtung zur Elektrodeionisation einer wässerigen Elektrolytlösung, umfassend ein Elektrodeionisationsmodul (1), ein Ultrafiltrationsmodul (21, 22, 1201, 1202, 1203) und ein Verbindungsteil (3, 10), das das Elektrodeionisationsmodul (1) und das Ultrafiltrationsmodul (21, 22, 1201, 1202, 1203) dergestalt miteinander verbindet, dass es zum Leiten des beim Betrieb der Vorrichtung im Elektrodeionisationsmodul (1) aus der Elektrolytlösung erzeugten Diluates vom Elektrodeionisationsmodul (1) zum Ultrafiltrationsmodul (21, 22, 1201, 1202, 1203) befähigt ist, **dadurch gekennzeichnet, dass** die Vorrichtung in dem Verbindungsteil (3, 10) kein verstellbares Druckhalteventil aufweist; dass das Ultrafiltrationsmodul (21, 22, 1201, 1202, 1203) eine Einlassöffnung, eine Auslassöffnung und im Innern des Ultrafiltrationsmoduls (21,22,1201,1202,1203) Filtermembranen in Form von U-förmig gebogenen Hohlfasern mit je zwei mit der Auslassöffnung in hydraulischer Verbindung stehenden Enden aufweist, und dass das Diluat über die Einlassöffnung in das Innere des Ultrafiltrationsmoduls (21,22,1201,1202,1203) hineinführbar, durch Eindringen von einem Aussenraum der Hohlfasern in das Lumen der Hohlfasern filtrierbar, und als das Filtrat den Hohlfasern über ihre beiden Enden und dem Ultrafiltrationsmodul (21,22,1201,1202,1203) über die Auslassöffnung entnehmbar ist.

2. Vorrichtung nach Anspruch 1, **dadurch gekennzeichnet, dass** sie auch im Elektrodeionisationsmodul (1) und im Ultrafiltrationsmodul (21, 22, 1201, 1202, 1203) kein verstellbares Druckhalteventil aufweist.

3. Vorrichtung nach Anspruch 1 oder 2, **dadurch gekennzeichnet, dass** das Elektrodeionisationsmodul (1) ein Wickelmodul ist.

4. Vorrichtung nach Anspruch 3, **dadurch gekennzeichnet, dass** der Fluss der zu entsalzenden Elektrolytlösung im Wickelmodul axial geführt ist.

5. Vorrichtung nach einem der Ansprüche 1 bis 4, **dadurch gekennzeichnet, dass** sie mehrere parallel geschaltete Ultrafiltrationsmodule (21, 22, 1201, 1202, 1203) aufweist.

6. Vorrichtung nach einem der Ansprüche 1 bis 5, die in ein Mantelteil (9) eingebaut ist.

7. Vorrichtung nach Anspruch 1, umfassend:
a) ein Elektrodeionisationsmodul (1) in Form eines Wickelmoduls, in dem die Flüsse in der oder den Konzentratkammern und in der oder den Diluatkammern parallel zueinander und tangential geführt sind,
b) ein bis zehn Ultrafiltrationsmodule (21, 22), wobei jedes der Ultrafiltrationsmodule (21, 22) in seinem Inneren U-förmig gebogene Hohlfasern aufweist, deren offene Enden in hydraulischer Verbindung mit der Auslassöffnung des Ultrafiltrationsmoduls (21, 22) stehen; und
c) ein Verbindungsteil (3) mit einer ersten Seite und einer zweiten Seite, an dessen erster Seite das Wickelmodul befestigt ist und an dessen zweiter Seite die Ultrafiltrationsmodule (21, 22) befestigt sind, das eine Durchtrittsöffnung (6) und einen inneren Kanal (7) aufweist, die beide in hydraulischer Verbindung zueinander sind, und wobei jedes Ultrafiltrationsmodul (21, 22) dergestalt an dem Verbindungsteil (3) befestigt ist, dass seine Einlassöffnung für das Diluat mit dem Kanal (7) in hydraulischer Verbindung ist.

8. Vorrichtung nach Anspruch 1, umfassend:
a) ein Elektrodeionisationsmodul (1) in Form eines Wickelmoduls, in dem die Flüsse in der oder den Konzentratkammern tangential und die Flüsse in der oder den Diluatkammern axial geführt sind,
b) eines bis fünfzehn Ultrafiltrationsmodule (1201, 1202, 1203), wobei jedes der Ultrafiltrationsmodule (1201, 1202, 1203) in seinem Inneren U-förmig gebogene Hohlfasern aufweist, deren offene Enden in hydraulischer Verbindung mit einer Auslassöffnung des Ultrafiltrationsmoduls (1201, 1202, 1203) sind; und
c) ein Verbindungsteil (10) mit einer ersten Seite und einer zweiten Seite, an dessen erster Seite das Wickelmodul befestigt ist und an dessen zweiter Seite die Ultrafiltrationsmodule (1201, 1202, 1203) befestigt sind, und das an seiner ersten Seite einen Sammelraum (11) aufweist, der zum Sammeln des beim Betrieb der Vorrichtung im Elektrodeionisationsmodul (1) aus der Elektrolytlösung erzeugten Diluates befähigt ist, und das eine Anzahl von Durchtrittsöffnungen (101), die mit dem Sammelraum (11) in hydraulischer Verbindung sind, aufweist, wobei die Anzahl der Durchtrittsöffnungen (101) gleich ist wie die Anzahl der Ultrafiltrationsmodule (1201, 1202, 1203), und wobei jedes Ultrafiltrationsmodul (1201, 1202, 1203) dergestalt an dem Verbindungsteil (10) befestigt ist, dass seine Einlassöffnung für das Diluat in hydraulischer Verbindung mit einer Durchtrittsöffnung (101) ist.

9. Verfahren zur Elektrodeionisation einer wässerigen Elektrolytlösung, **dadurch gekennzeichnet, dass** eine Vorrichtung nach Anspruch 1 eingesetzt wird; und dass das Diluat über die Einlassöffnung in das Innere des Ultrafiltrationsmoduls (21,22,1201,1202,1203) hineingeführt wird, durch Eindringen von dem Aussenraum der Hohlfasern in das Lumen der Hohlfasern filtriert, und als das Filtrat den Hohlfasern über ihre beiden Enden und dem Ultrafiltrationsmodul (21,22,1201,1202,1203) über die Auslassöffnung entnommen wird.

## Claims

1. A device for the electrodeionisation of an aqueous electrolyte solution, comprising an electrodeionisation module (1), an ultrafiltration module (21, 22, 1201, 1202, 1203) and a connection piece (3, 10) which connects the electrodeionisation module (1) and the ultrafiltration module (21, 22, 1201, 1202, 1203) such as to be able to guide the diluate produced out of the electrolyte solution during operation of the device in the electrodeionisation module (1) from the electrodeionisation module (1) to the ultrafiltration module (21, 22, 1201, 1202, 1203), charcterised in that the device does not have in the connection piece (3, 10) an adjustable pressure-maintaining valve; in that the ultrafiltration module (21, 22, 1201, 1202, 1203) has an inlet opening, an outlet opening and in the interior of the ultrafiltration module (21, 22, 1201, 1202, 1203) filter membranes in the form of hollow fibers bent into a U-shape each having two ends hydraulically connected with the outlet opening, and in that the diluate is guidable via the inlet opening into the interior of the ultrafiltration module (21, 22, 1201, 1202, 1203), is filtrable by entering from an outer space of the hollow fibers into the lumen of the hollow fibers, and is removable as the filtrate from the hollow fibers via both their ends and from the ultrafiltration module via the outlet opening.

2. The device according to claim 1, **characterised in that** it does not have either an adjustable pressure-maintaining valve in the electrodeionisation module (1) and in the ultrafiltration module (21, 22, 1201, 1202, 1203).

3. The device according to claim 1 or 2, **characterised in that** the electrodeionisation module (1) is a spiral wound module.

4. The device according to claim 3, **characterised in that** the flow of the electrolyte solution to be desalinated is guided axially in the spiral wound module.

5. The device according to one of claims 1 to 4, **characterised in that** it has several ultrafiltration modules (21, 22, 1201, 1202, 1203) connected in parallel.

6. The device according to one of claims 1 to 5, which is built into a casing element (9).

7. The device according to claim 1, comprising:
a) an electrodeionisation module (1) in the form of a spiral wound module, in which the flows in the concentrate chamber(s) and in the diluate chamber(s) are guided in parallel to each other and tangentially,
b) one to ten ultrafiltration modules (21, 22), whereby each of the ultrafiltration modules (21, 22) has in its interior hollow fibers bent in a U-shape, the open ends thereof being hydraulically connected with the outlet opening of the ultrafiltration module (21, 22); and
c) a connecting piece (3) with a first side and a second side, wherein on its first side is attached the spiral wound module (1) and on its second side are attached the ultrafiltration modules (21, 22), which has a passage opening (6) and an inner channel (7) both being hydraulically connected to each other, and whereby each ultrafiltration module (21, 22) is attached to the connecting piece (3) in such a way that its inlet opening for the diluate is hydraulically connected with the channel (7).

8. The device according to claim 1, comprising:
a) an electrodeionisation module (1) in the form of a spiral wound module, in which the flows are guided tangentially in the concentrate chamber(s) and axially in the diluate chamber(s),
b) one to fifteen ultrafiltration modules (1201, 1202, 1203), whereby each of the ultrafiltration modules (1201, 1202, 1203) has in its interior hollow fibers bent in a U-shape, the open ends thereof being hydraulically connected with an outlet opening of the ultrafiltration module (1201, 1202, 1203); and
c) a connecting piece (10) with a first side and a second side, wherein on its first side is attached the spiral wound module (1) and on its second side are attached the ultrafiltration modules (1201, 1202, 1203), and which has on its first side a collection space (11) which is able to collect the diluate produced out of the electrolyte solution in operation of the device in the electrodeionisation module (1), and which has a number of passage openings (101) hydraulically connected with the collection space (11), whereby the number of passage openings (101) is equal to the number of ultrafiltration modules (1201, 1202, 1203), and whereby each ultrafiltration module (1201, 1202, 1203) is attached to the connecting piece (10) in such a way that its inlet opening for the diluate is hydraulically connected with a passage opening (101).

9. A method for the electrodeionisation of an aqueous electrolyte solution, **characterised in that** a device according to claim 1 is employed; and **in that** the diluate is guided via the inlet opening into the interior of the ultrafiltration module (21, 22, 1201, 1202, 1203), is filtered by entering from the outer space of the hollow fibers into the lumen of the hollow fibers, and is removed as the filtrate from the hollow fibers via both their ends and from the ultrafiltration module (21, 22, 1201, 1202, 1203) via the outlet opening.

## Revendications

1. Dispositif pour l'électrodéionisation d'une solution aqueuse d'électrolytes, comprenant un module d'électrodéionisation (1), un module d'ultrafiltration (21, 22, 1201, 1202, 1203) et une partie de raccordement (3, 10) qui raccorde le module d'électrodéionisation (1) au module d'ultrafiltration (21, 22, 1201, 1202, 1303) de telle manière que ladite partie de raccordement est en mesure de conduire le diluat produit à partir de la solution d'électrolytes, dans le module d'électrodéionisation (1), lors du fonctionnement du dispositif, du module d'électrodéionisation (1) au module d'ultrafiltration (21, 22, 1201, 1202, 1203), **caractérisé en ce que** le dispositif ne présente dans la partie de raccordement (3, 10) aucune soupape réglable de maintien de pression, **en ce que** le module d'ultrafiltration (21, 22, 1201, 1202, 1203) présente un orifice d'admission, un orifice d'évacuation et, à l'intérieur du module d'ultrafiltration (21, 22, 1201, 1202, 1203), des membranes filtrantes en forme de fibres creuses pliées en forme de U dotées chacune de deux extrémités se trouvant en liaison hydraulique avec l'orifice d'évacuation, et **en ce que** le diluat peut être introduit à l'intérieur du module d'ultrafiltration (21, 22, 1201, 1202, 1203) par l'intermédiaire de l'orifice d'admission, peut être filtré en pénétrant d'un espace extérieur des fibres creuses dans le lumen des fibres creuses, et peut être prélevé, comme le filtrat, des fibres creuses par l'intermédiaire de leurs deux extrémités et du module d'ultrafiltration (21, 22, 1201, 1202, 1203) par l'intermédiaire de l'orifice d'évacuation.

2. Dispositif selon la revendication 1, **caractérisé en ce qu'**il ne présente non plus aucune soupape réglable de maintien de pression dans le module d'électrodéionisation (1) et dans le module d'ultrafiltration (21, 22, 1201, 1202, 1203).

3. Dispositif selon la revendication 1 ou 2, **caractérisé en ce que** le module d'électrodéionisation (1) est un module à enroulement.

4. Dispositif selon la revendication 3, **caractérisé en ce que** le flux de la solution d'électrolytes à dessaler est guidé de manière axiale dans le module à enroulement.

5. Dispositif selon l'une quelconque des revendications 1 à 4, **caractérisé en ce qu'**il présente plusieurs modules d'ultrafiltration (21, 22, 1201, 1202, 1203) branchés en manière parallèle.

6. Dispositif selon l'une quelconque des revendications 1 à 5, lequel est monté dans une partie enveloppante (9).

7. Dispositif selon la revendication 1, comprenant :
a) un module d'électrodéionisation (1) sous la forme d'un module à enroulement, dans lequel les flux dans la ou les chambres de concentré et dans la ou les chambres de diluat sont guidés de manière parallèle les uns par rapport aux autres et de manière tangentielle,
b) un à dix modules d'ultrafiltration (21, 22), chacun des modules d'ultrafiltration (21, 22) présentant dans son intérieur des fibres creuses pliées en forme de U, dont les extrémités ouvertes se trouvent en liaison hydraulique avec l'orifice d'évacuation du module d'ultrafiltration (21, 22), et
c) une partie de raccordement (3) comprenant un premier côté et un deuxième côté, le module à enroulement étant fixé à son premier côté et les modules d'ultrafiltration (21, 22) étant fixés à son deuxième côté, laquelle partie de raccordement présentant un orifice de passage (6) et un canal intérieur (7), les deux se trouvant en liaison hydraulique l'un par rapport à l'autre, et dans lequel chaque module d'ultrafiltration (21, 22) est fixé à la partie de raccordement (3) de telle manière que l'orifice d'admission dudit module d'ultrafiltration pour le diluat se trouve en liaison hydraulique avec le canal (7).

8. Dispositif selon la revendication 1, comprenant :
a) un module d'électrodéionisation (1) sous la forme d'un module à enroulement, dans lequel les flux sont guidés de manière tangentielle dans la ou les chambres de concentré et sont guidés de manière axiale dans la ou les chambres de diluat ;
b) un à quinze modules d'ultrafiltration (1201, 1202, 1203), chacun des modules d'ultrafiltration (1201, 1202, 1203) présentant dans son intérieur des fibres creuses pliées en forme de U, les extrémités ouvertes desquelles se trouvant en liaison hydraulique avec un orifice d'évacuation du module d'ultrafiltration (1201, 1202, 1203) ; et
c) une partie de raccordement (10) comprenant un premier côté et un deuxième côté, le module à enroulement étant fixé à son premier côté et les modules d'ultrafiltration (1201, 1202, 1203) étant fixés à son deuxième côté, laquelle partie de raccordement présente à son premier côté un espace collecteur (11), qui est capable de collecter le diluat produit à partir de la solution d'électrolytes, lors du fonctionnement du dispositif, dans le module d'électrodéionisation (1), et laquelle partie de raccordement présente un certain nombre d'orifices de passage (101) qui se trouvent en liaison hydraulique avec l'espace collecteur (11), le nombre d'orifices de passage (101) étant identique au nombre des modules d'ultrafiltration (1201, 1202, 1203), et dans lequel chaque module d'ultrafiltration (1201, 1202, 1203) est fixé à la partie de raccordement (10) de telle manière que son orifice d'admission pour le diluat se trouve en liaison hydraulique avec un orifice de passage (101).

9. Procédé d'électrodéionisation d'une solution aqueuse d'électrolytes, **caractérisé en ce qu'**on utilise un dispositif selon la revendication 1, et **en ce que** le diluat est introduit à l'intérieur du module d'ultrafiltration (21, 22, 1201, 1202, 1203) par l'intermédiaire de l'orifice d'admission, est filtré en pénétrant l'espace extérieur des fibres creuses dans le lumen des fibres creuses et est prélevé, en tant que le filtrat, des fibres creuses par l'intermédiaire de leurs deux extrémités et du module d'ultrafiltration (21, 22, 1201, 1202, 1203) par l'intermédiaire de l'orifice d'évacuation.
